Europäisches Patentamt

(19) European Patent Office (11) Numéro de publication : **0 142 417**

Office européen des brevets **B1**

(12) **FASCICULE DE BREVET EUROPÉEN**

(45) Date de publication du fascicule du brevet : 02.12.87

(21) Numéro de dépôt : 84402089.1

(22) Date de dépôt : 17.10.84

(51) Int. Cl.⁴ : **G 06 F 15/62**

(54) **Procédé d'acquisition et de reconstruction d'image par tomodensitométrie, et tomodensitomètre mettant en oeuvre ce procédé.**

(30) Priorité : 25.10.83 FR 8316995

(43) Date de publication de la demande :
22.05.85 Bulletin 85/21

(45) Mention de la délivrance du brevet :
02.12.87 Bulletin 87/49

(84) Etats contractants désignés :
**DE GB IT NL**

(56) Documents cités :
**EP-A- 0 083 455
EP-A- 0 094 124
IEEE TRANSACTIONS ON NUCLEAR SCIENCE, vol.
NS-26, no. 2, avril 1979, pages 2895-2902, IEEE, New
York, US; G. KOWALSKI: "Multislice reconstruction
from twin-cone beam scanning"**

(73) Titulaire : **THOMSON-CGR
13, square Max-Hymans
F-75015 Paris (FR)**

(72) Inventeur : **Tan, Siv Cheng
THOMSON-CSF SCPI 173, bld Haussmann
F-75379 Paris Cedex 08 (FR)**
Inventeur : **Benchimol, Claude
THOMSON-CSF SCPI 173, bld Haussmann
F-75379 Paris Cedex 08 (FR)**
Inventeur : **Nguyen, Tri-Hüe
THOMSON-CSF SCPI 173, bld Haussmann
F-75379 Paris Cedex 08 (FR)**

(74) Mandataire : **Grynwald, Albert et al
THOMSON-CSF SCPI 19, avenue de Messine
F-75008 Paris (FR)**

Jouve, 18, rue St-Denis, 75001 Paris, France

## Description

L'invention concerne un procédé de reconstruction d'image par tomodensitométrie ayant plus particulièrement pour but d'améliorer la définition de l'image reconstruite sans alourdir la structure technologique des moyens de mesure de l'absorption de rayonnement pénétrant. L'invention concerne également tout tomodensitomètre adapté pour mettre en œuvre ce procédé.

Les tomodensitomètres dits de « troisième génération » se composent essentiellement d'une source de rayonnement pénétrant (des rayons X) émettant un faisceau plat en éventail, d'une rangée courbe de détecteurs placés en regard de cette source pour mesurer la fraction non absorbée du rayonnement dans le plan de la coupe à imager, des moyens pour faire tourner la source et les détecteurs dans le plan de cette coupe et un ordinateur pour traiter les données fournies par les détecteurs et reconstruire une image à partir de ces données. La définition de l'image reconstruite dépend notamment du nombre des détecteurs embrassant l'éventail du faisceau de rayons X. Pour une ouverture de faisceau donné, plus le nombre de détecteurs est élevé et plus la définition est bonne. Cependant, l'ensemble multidétecteurs est l'un des organes les plus coûteux du tomodensitomètre et l'un de ceux qui est le plus difficile à fabriquer avec une bonne fiabilité. Par conséquent, l'augmentation du nombre de détecteurs sur un secteur donné correspondant à l'éventail, se heurte à des limites technologiques.

L'un des buts de l'invention est d'améliorer sensiblement la définition de l'image sans modifier la structure technologique de l'ensemble source-détecteurs.

Un autre but de l'invention est aussi de réduire le coût de construction d'un tomodensitomètre ayant la même définition que les tomodensitomètres actuellement existants, cette réduction de coût étant obtenue en utilisant un ensemble multidétecteurs comportant deux fois moins de détecteurs que les machines existantes. Dans ce dernier cas, non seulement l'ensemble multidétecteurs serait plus facile et moins coûteux à fabriquer, mais la réduction de coût s'étendrait aussi aux moyens électroniques d'acquisition des données. De tels buts et de tels tomodensitomètres sont connus par les demandes de brevet européen 82 112 119.1 (EP-A-0 083 455) et 82 200 630.8 (cette dernière demande de brevet n'a d'ailleurs été publiée qu'après la date de priorité de la demande de brevet correspondant à la présente invention). Cependant dans ces demandes de brevet le réarrangement des données représentatives de l'image est complexe.

Selon l'invention, ces buts sont atteints grâce à un procédé de reconstruction d'image par tomodensitométrie, du type consistant à faire tourner un ensemble source-détecteurs dans le plan d'une coupe à imager, ladite source émettant un faisceau de rayonnement pénétrant en forme d'éventail et à relever et mémoriser une succession d'ensembles de valeurs appelés vues pour différents angles $\beta$ de rotation de l'ensemble source-détecteurs par rapport à un système d'axes de référence fixe dudit plan, lesdits détecteurs étant agencés pour converger vers le foyer de ladite source et chaque vue étant échantillonnée pour des angles $\gamma$ représentatifs des détecteurs et repérés à partir de la droite joignant le centre de rotation de l'ensemble source-détecteurs et ledit foyer, le décalage angulaire entre deux détecteurs adjacents étant $\Delta\gamma$ constant et le décalage angulaire entre vues étant constant, le décalage angulaire entre ladite droite et le détecteur le plus proche de celle-ci étant réglé $|\Delta\gamma/4|$, caractérisé en ce qu'il consiste, les conditions suivantes étant réalisées :

$\pi/\Delta\gamma_e = N$, avec N entier positif, en posant $\gamma_e = (1 + \alpha)\,\gamma$ où $\alpha$ est un coefficient dépendant de la vitesse de rotation de l'ensemble source-détecteurs et du temps d'acquisition d'une vue ;

— à relever et mémoriser deux séries de vues avec un décalage angulaire entre vues de $h \cdot \Delta\beta$ pour la première série et $\Delta\beta$ pour la seconde série, au moins certaines des vues des deux séries étant décalées entre elles de $|\Delta\gamma_e/2|$, avec $\Delta\beta = 2\Delta\gamma_e$, h étant entier positif ;

— à compléter les vues de la première série par des valeurs échantillonnées de la seconde série dont les coordonnées $(\theta', \gamma')$ repérées dans l'espace $[\theta, \gamma_e]$ avec $\theta = \beta + \gamma_e$ satisfont à la relation :

$$(\theta x, \gamma x) = (\theta' + (2k + 1)\,\pi, -\,\gamma')$$

avec k entier relatif

$(\theta x, \gamma x)$ étant les coordonnées dans l'espace $[\theta, \gamma_e]$ des valeurs échantillonnées recherchées de la première série, et

— à appliquer un algorithme de reconstruction, connu en soi, comprenant une convolution et une rétro-projection, aux vues complétées de la première série, pour reconstituer une image.

L'invention concerne aussi un tomodensitomètre du type comportant un ensemble source-détecteurs monté tournant dans un plan de coupe à imager, ladite source étant une source de rayonnement pénétrant en forme d'éventail et lesdits détecteurs étant agencés pour converger vers le foyer de ladite source, lesdits détecteurs étant vus dudit foyer suivant des angles $\gamma$ respectifs repérés à partir de la droite joignant ledit foyer et le centre de rotation de l'ensemble source-détecteurs, deux détecteurs voisins étant angulairement décalés de $\Delta\gamma$,

— des moyens de pilotage pour repérer un certain nombre d'angles $\beta$ de prises de vues de l'ensemble source-détecteurs par rapport à un système d'axes de référence et pour engendrer des signaux de commande desdites prises de vues,

— des moyens de mémorisation d'informations représentatives d'ensembles, appelés vues, de valeurs échantillonnées par les détecteurs pour des angles β précités,

— un décalage angulaire entre ladite droite et le détecteur le plus proche de celle-ci est prédéterminé à $|\Delta\gamma/4|$.

— des moyens de calcul pour appliquer un algorithme de reconstruction, connu en soi, comprenant une convolution et une rétroprojection à une série de vues, caractérisé en ce que :

— les conditions suivantes sont satisfaites :

$\pi/\Delta\gamma_e = N$, avec N entier positif, en posant $\gamma_e = (1 + \alpha)\gamma$ où $\alpha$ est un coefficient dépendant de la vitesse de rotation de l'ensemble source-détecteurs et du temps d'acquisition d'une vue ;

— les moyens de pilotage comportent des moyens pour commander la prise et la mémorisation de deux séries de vues échantillonnées, lesdites séries étant telles qu'au moins certaines vues voisines de séries différentes sont décalées entre elles de $|\Delta\gamma_e/2|$, les vues de la première série étant décalées angulairement au pas de $h \cdot \Delta\beta$ et celles de la seconde série étant décalées angulairement au pas de $\Delta\beta$, avec $\Delta\beta = 2\Delta\gamma_e$ et h entier positif, et

— en ce qu'il comporte des moyens de réarrangement pour compléter les vues de la première série par des valeurs échantillonnées prélevées dans la seconde série dont les coordonnées $(\theta', \gamma')$ dans l'espace $[\theta, \gamma_e]$ avec $\theta = \beta + \gamma_e$ satisfont à la relation

$$(\theta x, \gamma x) = (\theta' + (2k + 1)\,\Pi, - \gamma')$$

avec k entier relatif, $(\theta x, \gamma x)$ étant les coordonnées dans l'espace $[\theta, \gamma_e]$ des valeurs échantillonnées recherchées de la première série.

L'invention sera mieux comprise et d'autres avantages de celle-ci apparaîtront mieux à la lumière de la description qui va suivre d'un procédé conforme à son principe et des éléments constitutifs essentiels d'un tomodensitomètre fonctionnant selon ce procédé, faite en référence aux dessins annexés dans lesquels :

— la figure 1 est une représentation schématique des principaux éléments constitutifs d'un tomodensitomètre mettant en œuvre l'invention ;

— la figure 2 est une représentation dans l'espace $[\theta, \gamma]$ des vues prises par un tomodensitomètre classique fonctionnant en mode pulsé pour la reconstruction d'une image ;

— la figure 3 est une représentation dans le même espace $[\theta, \gamma]$ des vues prises par un tomodensitomètre du même type dans lequel on a effectué l'une des modifications nécessaires à la mise en œuvre de l'invention, à savoir un décalage statique entre la source et les détecteurs ;

— la figure 4 est une représentation dans l'espace $[\theta, \gamma]$ des vues prises par un tomodensitomètre fonctionnant selon le processus de l'invention ;

— la figure 5 est une représentation dans l'espace $[\theta, \gamma]$ du résultat d'une transformation, faisant partie de l'invention, appliquée à une vue ;

— la figure 6 illustre le résultat de l'application de cette transformation à certaines vues de la figure 4 ;

— la figure 7 illustre dans l'espace $[\theta, \gamma]$ le résultat de la même transformation appliquée selon une variante de l'invention ;

— la figure 8 est une représentation dans l'espace $[\theta, \gamma]$ d'une vue, dans le cas d'un tomodensitomètre fonctionnant en mode continu.

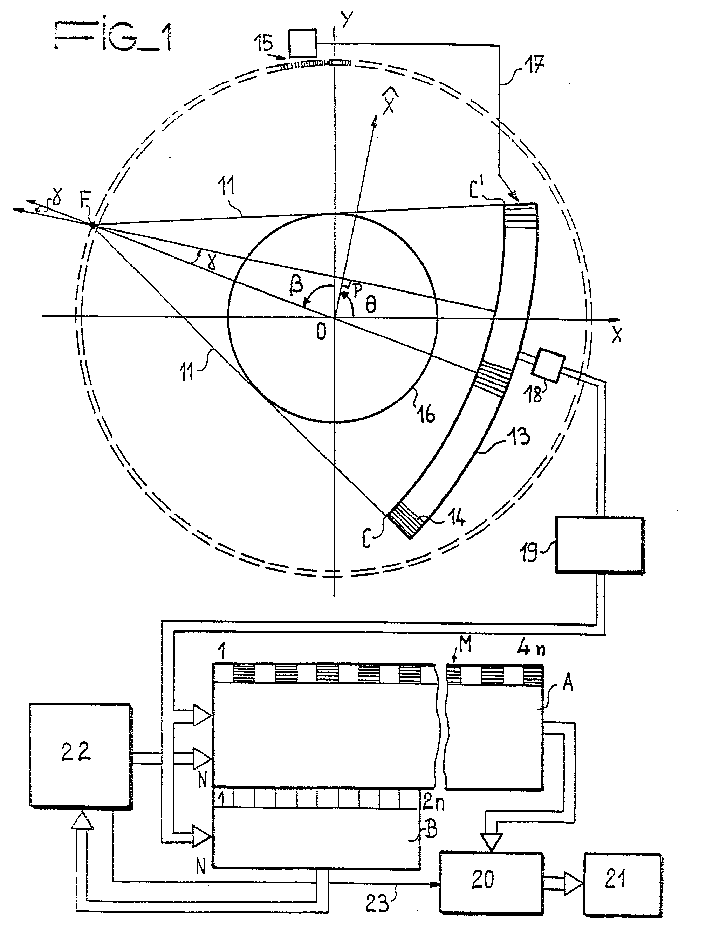

La suite de la description, en référence aux figures 1 à 7, se place dans le cas particulier d'un tomodensitomètre fonctionnant en mode pulsé. Ce genre de tomodensitomètre est bien connu. Dans la plupart des cas, le mode pulsé se concrétise par le fait que le faisceau en éventail n'est émis que pendant un intervalle de temps très bref au moment où l'ensemble source-détecteurs se trouve à un angle β prédéterminé. Dans ce cas, il suffit que la lecture de tous les détecteurs soit achevée lorsque l'ensemble source-détecteurs parvient à l'angle β suivant. Cependant, une autre façon de réaliser ledit mode pulsé peut consister à générer en permanence le faisceau en éventail mais à « lire » tous les détecteurs simultanément à chaque angle β. Dans le cas d'un fonctionnement en mode pulsé et comme on le vérifiera plus loin, le coefficient $\gamma_e$ mentionné ci-dessus est égal à $\gamma$ et $\Delta\gamma_e = \Delta\gamma$.

En se reportant à la figure 1, on a représenté les éléments constitutifs essentiels d'un tomodensitomètre. Cet appareil comporte un ensemble source-détecteurs mobile en rotation dans un plan d'une coupe à imager. Le centre de rotation est O et le plan de la coupe sera considéré comme étant celui de la fligure 1. On associe à ce plan de coupe un système d'axes de référence fixe XOY, orthonormé. La source est symbolisée sur le dessin par son foyer F. De façon bien connue, il s'agit d'une source de rayonnement pénétrant et plus particulièrement des rayons X, émettant un faisceau 11 en forme d'éventail. Dans la suite du texte, on parlera simplement de la source F. Le boîtier 13 renfermant tous les détecteurs 14 a une forme courbe pour que ces détecteurs 14 soient agencés suivant un arc de cercle $\overset{\frown}{CC'}$ géométriquement centré sur le foyer F. Le faisceau en éventail 11 embrasse l'arc de cercle $\overset{\frown}{CC'}$ occupé par les faces d'entrée des détecteurs 14. Ainsi, l'image reconstituée sera à l'intérieur du cercle 16 de centre O, inscrit dans les limites de l'angle $\overset{\frown}{CFC'}$. Classiquement, on peut utiliser un ensemble comportant 1 024 détecteurs 14. Le boîtier 13 et la source F sont solidaires d'un même support tournant (centre de rotation O) et fixes l'un par rapport à l'autre de sorte qu'on peut repérer la rotation de l'ensemble source-détecteurs par l'angle β entre

3

**0 142 417**

l'axe OY et la droite OF. Les valeurs d'atténuation linéaires du faisceau de rayons X pour des angles $\beta$ prédéterminés sont relevées et mémorisées dans une mémoire M d'un ordinateur. Pour chaque angle $\beta$ prédéterminé, un ordre de lecture des détecteurs 14 est émis, par exemple au moyen d'un codeur incrémental 15 agencé pour lire des informations d'angles solidaires de l'ensemble tournant source-détecteurs et pour délivrer (liaison de pilotage 17) des ordres de commande de lecture de l'état de tous les détecteurs 14. L'ensemble des valeurs relevées pour un angle $\beta$ donné est appelé « vue ».

On peut donc considérer que chaque vue est échantillonnée de par la structure même de l'ensemble de détecteurs, pour des angles $\gamma$ représentatifs des détecteurs. Chaque angle $\gamma$ indiquant la position d'un détecteur 14 est repéré à partir de la droite OF. De ce fait on appellera $\Delta\gamma$ le décalage angulaire constant entre les centres des faces d'entrée de deux détecteurs 14 adjacents.

Si on considère, pour chaque angle $\gamma$ d'une vue, l'axe O$\overset{\rightarrow}{X}$ perpendiculaire en P au rayon d'angle $\gamma$ frappant un détecteur quelconque, on démontre facilement que l'angle $\theta$ entre l'axe OX du repère fixe et l'axe O$\overset{\rightarrow}{X}$ est tels que :

$$\theta = \beta + \gamma$$

ceci dans tous les cas de figures, les angles $\theta$, $\beta$ et $\gamma$ étant orientés,
ou encore $\gamma = \theta - \beta$.

D'après cette dernière relation, on voit que les différentes vues (pour des angles $\beta$ différents) ont une représentation extrêmement simple dans l'espace $[\theta, \gamma]$.

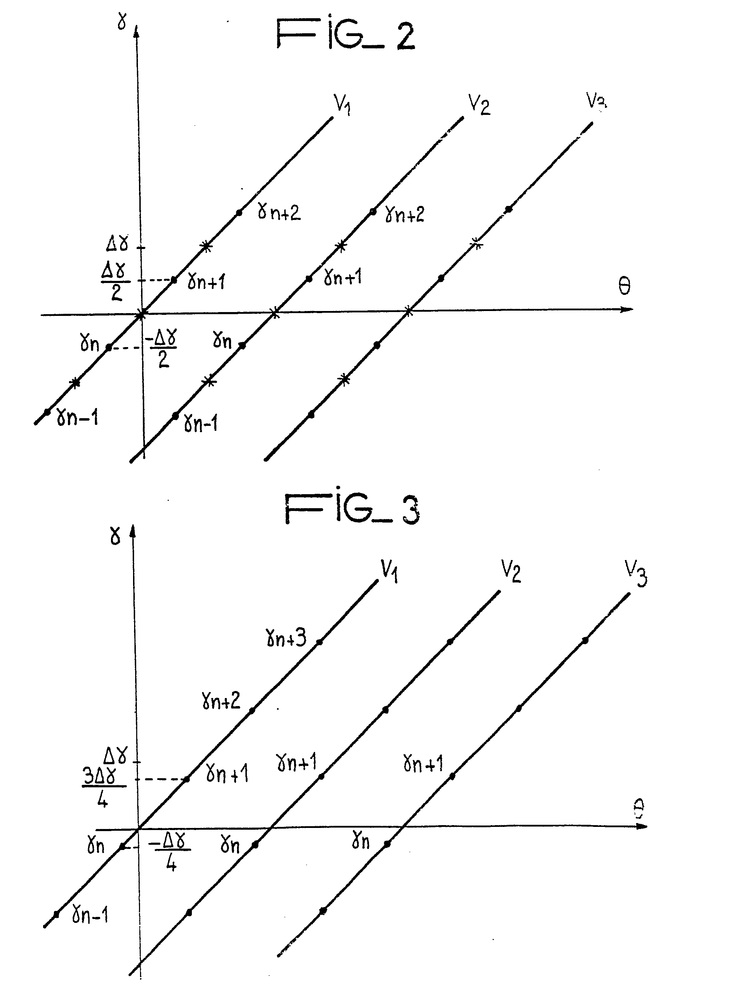

Comme le montre la figure 2, ces vues sont portées par des droites parallèles à la première bissectrice et décalées de $\Delta\beta$ le long de l'axe des $\overset{\rightarrow}{\theta}$. On peut porter sur ces droites des points représentant les coordonnées, dans l'espace $[\theta, \gamma]$ des valeurs échantillonnées effectivement acquises à la lecture des différentes vues.

Ainsi, si on suppose que le nombre de détecteurs est pair, soit 2n, et que la droite OF passe exactement entre les deux détecteurs du centre, $\gamma_n$ et $\gamma_{n+1}$, ceux-ci apparaissent décalés de $|\Delta\gamma/2|$ de part et d'autre de l'axe $\overset{\rightarrow}{\gamma}$. Le but de l'invention est d'obtenir pour chaque vue, des valeurs échantillonnées intermédiaires dont les coordonnées dans l'espace $[\theta, \gamma]$ sont figurés par des étoiles * sur la figure 2. Autrement dit, le but de l'invention est d'obtenir des vues comportant 4n valeurs échantillonnées avec un ensemble de 2n détecteurs seulement et d'améliorer ainsi la définition de l'image reconstruite.

Avant de définir l'invention sous une formulation plus générale, on va décrire complètement une solution particulière en fixant à priori un certain nombre de paramètres et on expliquera ensuite comment on peut faire varier certains d'entre eux pour définir un ensemble de solutions possibles.

Selon une possibilité de l'invention, on provoque avant tout un décalage angulaire permanent et prédéterminé entre l'ensemble des détecteurs 14 (c'est-à-dire le boîtier 13) et la droite OF. Selon l'exemple choisi, le décalage angulaire entre la droite OF et le détecteur le plus proche est choisi égal à — $\Delta\gamma/4$. Cela signifie que l'ensemble des détecteurs est décalé dans le sens inverse des aiguilles d'une montre en considérant la figure 1, de façon que le centre de la face d'entrée du détecteur $\gamma_n$ soit décalé angulairement de — $\Delta\gamma/4$ par rapport à OF et que le détecteur $\gamma_{n+1}$ soit décalé de $3\Delta\gamma/4$ par rapport à cette même droite.

La figure 3 montre la configuration des vues dans l'espace $[\theta, \gamma]$ après ce décalage.

Selon l'exemple décrit, on relève et mémorise deux séries $V_i$ et $W_i$ de vues et la machine est agencée pour que :

$$\pi/\Delta\gamma = N, \text{ N étant entier positif}$$

$$\Delta\beta = 2\Delta\gamma$$

Dans le cas où chaque série de vues est répartie sur un tour de l'ensemble source-détecteurs, alors N représente aussi le nombre de vues des séries. On suppose pour l'exemple que N est pair. Dans ces conditions, on décale les vues $W_i$ de la seconde série de + $\Delta\gamma/2$ par rapport aux vues $V_i$ de la première série.

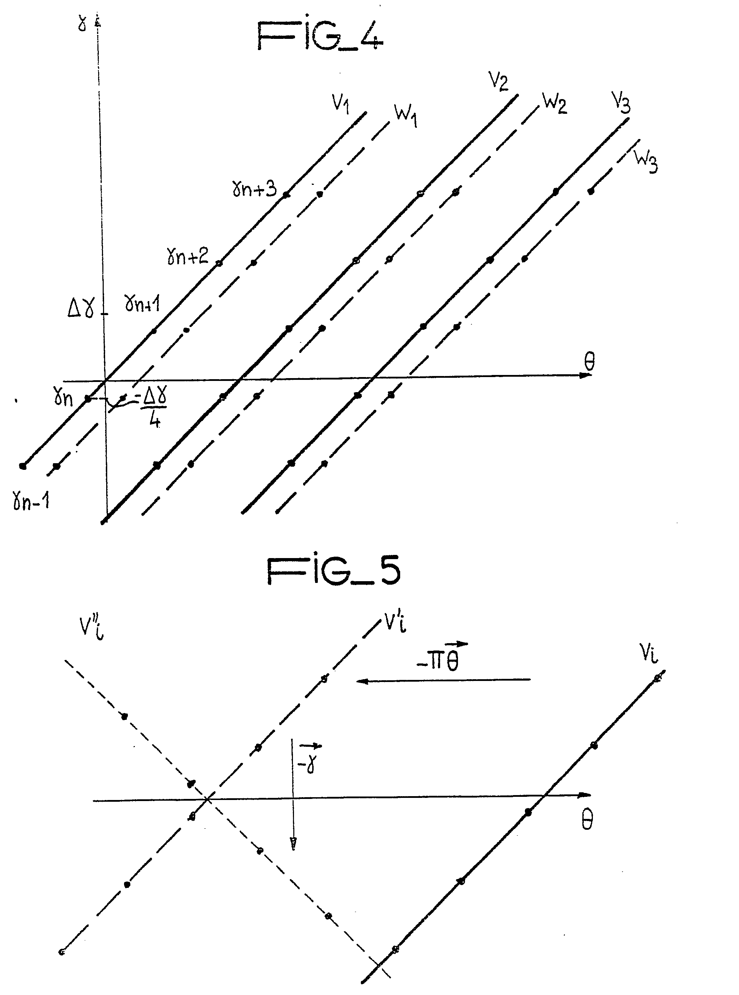

La figure 4 montre la représentation des vues $V_i$ et $W_i$ dans l'espace $[\theta, \gamma]$.

Soit la transformation :

$$T(\theta, \gamma) = (\theta - \pi, - \gamma)$$

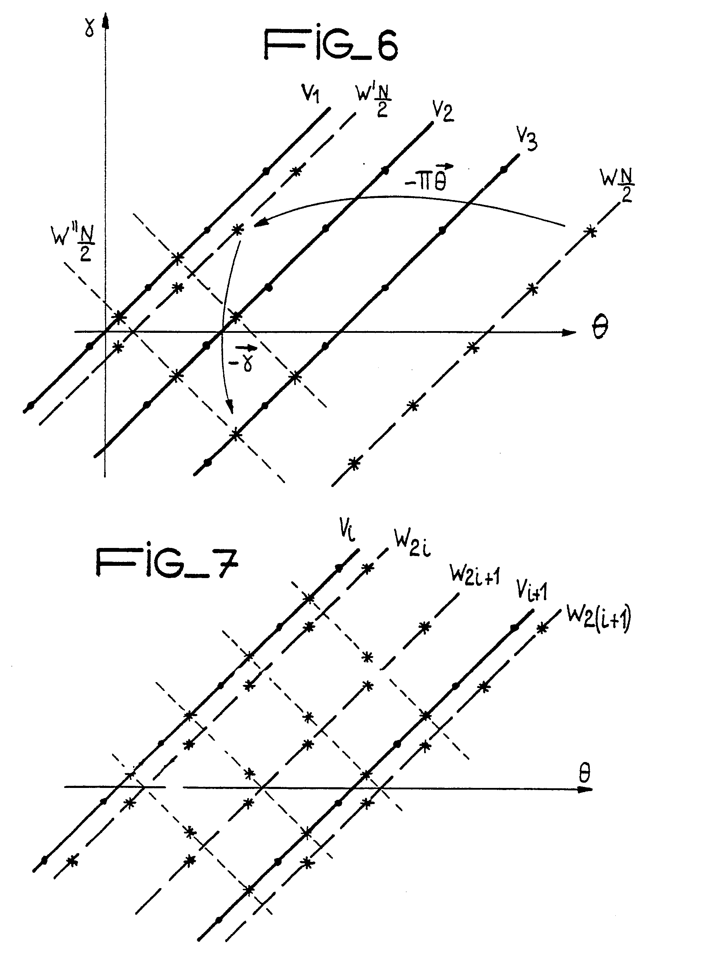

On peut démontrer que la fonction d'absorption d'une vue est invariante par cette transformation T. Or cette transformation T peut se décomposer dans l'espace $[\theta, \gamma]$ en une translation — $\pi\overset{\rightarrow}{\theta}$ suivie d'une symétrie par rapport à $\overset{\rightarrow}{\theta}$. Cette transformation est illustrée en soi à la figure 5. Si on applique ladite transformation à la série des vues $W_i$, on constate (figure 6) que les valeurs échantillonnées des vues $W_i$ ainsi transformées prennent automatiquement les coordonnées des valeurs échantillonnées intermédiaires recherchées, dans la série des vues $V_i$. Autrement dit, l'application de cette transformation aux valeurs échantillonnées des vues de la seconde série a pour conséquence de compléter les vues de la première série. Chaque vue $V_i$ complétée est donc deux fois plus échantillonnée que la vue $V_i$ d'origine.

On peut alors en déduire une étape de réarrangement des données traduisant cette transformation.

4

Selon ce réarrangement, on complète les vues de la première série par des valeurs échantillonnées de la seconde série dont les coordonnées $(\theta', \gamma')$ dans l'espace $[\theta, \gamma]$ satisfont à la relation :

$$(\theta x, \gamma x) = (\theta' + (2k + 1)\ \pi, -\gamma')$$

k étant un entier relatif, $(\theta x, \gamma x)$ étant les coordonnées, dans l'espace $[\theta, \gamma]$ des valeurs échantillonnées recherchées de la première série.

L'expression $(2k + 1)\ \pi$ traduit le fait que les vues réellement acquises $W_i$ de la deuxième série peuvent être théoriquement prolongées dans l'espace $[\theta, \gamma]$ de $-\infty$ à $+\infty$. En raison de la périodicité des vues au-delà d'un tour complet, qui peut se traduire ainsi :

$$W_i = W_j \Leftrightarrow i = j \text{ modulo } N$$

Autrement dit, même si la translation $\theta' + (2k + 1)\ \pi$ ne désigne pas une vue $W_i$ réellement acquise, il suffit de rechercher k pour que : $\theta x = \theta' + (2k + 1)\ \pi$ soit vérifiée avec $\theta'$ désignant une vue réellement acquise de la seconde série $W_i$.

Une fois le réarrangement des données, tel que décrit ci-dessus, effectué, il ne reste plus qu'à appliquer un algorithme de reconstruction connu en soi, comprenant une convolution et une rétroprojection aux vues complétées de la première série pour reconstruire une image de définition améliorée. En se reportant à nouveau à la figure 1, on a décrit sous forme de schéma-bloc fonctionnel les parties essentielles de l'ordinateur associé aux détecteurs 14. Les valeurs échantillonnées lues aux sorties des détecteurs 14 sont transformées en informations numériques grâce à un convertisseur analogique-numérique 18 puis traitées dans un préprocesseur 19 effectuant les opérations habituelles de calibration et de transformation logarithmique. Les informations ainsi transformées sont les valeurs d'atténuation linéaires et ces informations numériques sont mémorisées dans la mémoire M. Celle-ci est divisée en une mémoire A recevant dans un premier temps des informations numériques représentatives des vues $V_i$ de la première série et en une mémoire B recevant des informations numériques représentatives des vues $W_i$ de la seconde série. Selon ce qui précède, cette dernière se présente sous forme d'une matrice d'unités de mémorisation comprenant 2n colonnes (nombre de détecteurs par vues) et N lignes (nombre de vues $W_i$) dans le cas où l'acquisition de la seconde série de vues $W_i$ se fait sur un tour complet et avec

$$\Delta\beta_{Wi} = 2\pi/N$$

Par ailleurs, pour des raisons qui apparaîtront clairement plus loin, la mémoire A se présente sous forme d'une matrice d'unités de mémorisation comprenant 4 n colonnes et N lignes (nombre de vues $V_i$) puisque l'exemple décrit correspond aussi à une acquisition des vues $V_i$ sur un tour complet et avec

$$\Delta\beta_{V_i} = \frac{2}{N}\ \pi\ .$$

Le remplissage de la mémoire A par les informations représentatives des vues $V_i$ se fait à raison d'une unité de mémorisation sur 2 ; ces unités sont représentées en grisé sur la figure 1. La mémoire A est associée à des moyens de lecture 20 qui organisent le transfert des informations vers un processeur 21, connu en soi, et dont le rôle est d'appliquer l'algorithme de reconstruction mentionné plus haut. Cependant la lecture d'une ligne de la mémoire A n'est commandée que lorsque toutes les unités de mémorisation de cette ligne qui n'ont pas été « remplies » pendant la phase de mémorisation des vues $V_i$, auront reçu des informations numériques lues dans la mémoire B.

L'algorithme qui va être décrit maintenant et qui découle de la relation $(\theta x, \gamma x) = (\theta' + (2k + 1)\ \pi, -\gamma')$ permet d'organiser le transfert des informations depuis la mémoire B vers la mémoire A en vue de la compléter. Cette relation a été exprimée jusqu'ici dans l'espace $[\theta, \gamma]$ pour faciliter la démonstration car les vues $V_i$ et $W_i$ y ont une représentation particulièrement simple. Cependant, les paramètres pris en compte pour l'adressage des mémoires au moment de la lecture des vues $V_i$ et $W_i$ sont en fait :

— $\beta$ : la position angulaire de l'ensemble source-détecteurs, et

— $\gamma$ : représentatif des détecteurs.

On montre que la relation simple : $\theta = \beta + \gamma$ permet de transcrire la relation qui précède dans l'espace $[\beta, \gamma]$ de la façon suivante :

$$((2k + 1)\ \pi + \beta_x + 2\gamma_x, -\gamma_x) = (\beta', \gamma')$$

$(\beta_x)$ et $(\gamma_x)$ étant les coordonnées dans l'espace $[\beta, \gamma]$ des valeurs échantillonnées manquantes des vues $V_i$ et $(\beta')$ et $(\gamma')$ étant les coordonnées des valeurs échantillonnées des vues $W_i$. Pour simplifier l'algorithme, on suppose que N est pair, soit $N = 2\ K = 2\pi/\Delta\beta$, avec K entier positif, mais il est à noter que N impair ne constitue pas un obstacle majeur à la définition d'un algorithme semblable dont la mise en œuvre aboutit au même résultat.

Le problème se résume à un simple calcul d'adresse pour aller chercher dans la mémoire B les

5

informations numériques représentatives des valeurs échantillonnées recherchées et pour recopier ces informations dans la mémoire A.

Soit la $i^{ieme}$ vue de la série $V_i$, celle-ci se trouve mémorisée toute entière dans la $i^{ieme}$ ligne de la mémoire-matrice A mais les valeurs échantillonnées à compléter ont une adresse de la forme :

$$A(i_A, j_A = 2 m - 1) \text{ avec } m \in [1,2n]$$

On déduit de la relation précédente que le numéro $i_B$ de la ligne de la mémoire-matrice B où se trouve la valeur échantillonnée à transférer à l'adresse A $(i_A, j_A)$ est

$$i_B = (K + m + i_A - n - 1) \text{ modulo } N \text{ avec } i_B \in [1,N]$$

Autrement dit, si l'expression $(K + m + i_A - n - 1) \notin [1,N]$, on retranche ou on ajoute N autant de fois que nécessaire pour ramener ladite expression dans l'intervalle $[1,N]$.

Une fois la ligne $i_B$ déterminée, le numéro de la colonne $i_B$ permettant de sélectionner la valeur échantillonnée recherchée est $j_B = (2 n + 1 - m)$ puis il suffit de transférer l'information contenue à l'adresse $B(i_B, j_B)$ pour l'inscrire à l'adresse $A(i_A, j_A)$. Les opérations de calcul d'adresse et de transfert d'information peuvent être pilotées par un processeur spécialisé ou de préférence, par un sous-programme de l'ordinateur. Ce processeur ou ce sous-programme est symbolisé à la figure 1 par le bloc fonctionnel 22 interconnecté entre les mémoires A et B. Il pilote aussi les moyens de lecture 20 (liaison fonctionnelle 23) gérant le transfert des informations depuis la mémoire A vers le processeur de reconstruction 21.

L'invention a été décrite ci-dessus en fixant pour simplifier certains paramètres. On va maintenant envisager d'autres variantes possibles.

Ainsi, on s'est placé dans le cas où

$$\Delta\beta = 2\Delta\beta \text{ avec } \pi/\Delta\gamma = N$$

Dans ce cas, il y a autant de vues dans les deux séries et, de toute façon, les vues de la seconde série doivent être prises dans ces conditions. Il se peut cependant que le nombre de vues de la première série soit supérieur à ce qui est normalement nécessaire pour reconstituer une image. Dans ce cas une première généralisation de l'invention consistera à relever et à mémoriser deux séries de vues avec un décalage entre vues de $h\Delta\beta$ pour la première série $V_i$ et $\Delta\beta$ pour la seconde série $W_i$. Dans ce cas, il apparaît que seulement certaines vues des deux séries seront décalées entre elles de $\Delta\gamma/2$ puisque des vues de la seconde série n'ont pas de vues « voisines » de la première série, à cause de la différence de pas angulaires. La figure 7 illustre cette situation, dans le cas où h = 2. On voit que $W_{2i+1}$ n'a pas de vue « voisine » de la première série décalée de $\Delta\gamma/2$. D'autre part, la figure 7 montre que des valeurs échantillonnées de la série $W_i$ sont inutiles après la transformation T si h est différent de 1. Pour optimiser le réarrangement, on pourra donc ne relever et/ou traiter qu'une valeur échantillonnée sur h dans chaque vue de la série $W_i$. Ceci compense la contrainte de devoir relever les vues $W_i$ avec un pas angulaire $2\Delta\gamma$.

Une autre situation dans laquelle seulement certaines vues des deux séries seront décalées de $\Delta\gamma/2$ est celle d'une acquisition « optimisée » des vues de chaque série, en moins d'un tour par série. On sait en effet que le nombre de vues nécessaire pour reconstruire une image peut être acquis en un peu plus d'un demi-tour de l'ensemble source-détecteurs, à savoir un demi-tour augmenté du secteur angulaire de l'éventail 11. Il existe des algorithmes de reconstruction adaptés à ce mode de prise de données. Si on applique le principe de l'invention à un tomodensitomètre utilisant un tel algorithme, les deux séries de vues n'auront qu'un secteur de rotation en commun (la première série étant par exemple prélevée seule sur un premier secteur angulaire puis des vues des deux séries étant prélevées sur un second secteur angulaire commun et la fin de la seconde série étant prélevée seule sur un troisième secteur angulaire) et bien sur, dans un tel cas, le décalage entre vue de $\Delta\gamma/2$ tel que défini plus haut, n'a de sens que pour le second secteur angulaire donc pour une partie des vues des deux séries.

Par ailleurs, d'autres valeurs de décalage angulaire (des détecteurs par rapport à la source d'une part et entre des vues des deux séries d'autre part) sont possibles.

Si l'on considère l'ensemble des détecteurs de la figure 1, soit 2 n détecteurs, on a analysé en détail le cas d'un décalage des détecteurs tels que $\gamma_n = \Delta\gamma/4$, avec N pair et un décalage de $+ \Delta\gamma/2$ entre vues des deux séries, ce qui signifie que la vue $W_i$ sera prise à $\beta = + \Delta\gamma/2$ si la vue $V_i$ a été prise à $\beta = 0$, $\beta$ étant orienté positivement dans le sens trigonométrique. On démontre que le résultat serait le même si le décalage entre vues était de $- 3\Delta\gamma/2$.

D'autre part, si N est impair, les deux valeurs possibles du décalage angulaire entre les vues sont $3\Delta\gamma/2$ ou $- \Delta\gamma/2$.

Par ailleurs le décalage angulaire entre les détecteurs et la source F peut aussi être tel que

$$\gamma_n = - 3\Delta_\gamma/4 \text{ c'est-à-dire } \gamma_{n+1} = + \Delta\gamma/4$$

Dans ces conditions, si N est pair, le décalage angulaire entre vues peut être de $- \Delta\gamma/2$ ou $+ 3\Delta\gamma/2$ et si N est impair, le décalage angulaire entre vues peut être de $+ \Delta\gamma/2$ ou $- 3\Delta\gamma/2$.

Or un décalage angulaire de $- 3\Delta\gamma/2$ par rapport à une vue de la première série équivaut à un décalage de $+ \Delta\gamma/2$ par rapport à la vue précédente de la même série et un décalage de $+ 3\Delta\gamma/2$ équivaut de la même façon à un décalage de $- \Delta\gamma/2$ par rapport à une vue suivante.

La généralité de la solution peut donc s'exprimer de la façon suivante :

— le décalage angulaire entre la droite OF et le détecteur le plus proche de celle-ci est réglé à $\Delta\gamma/4$ en valeur absolue soit $|\Delta\gamma/4|$

— le décalage angulaire relatif entre les vues des deux séries $V_i$ et $W_i$ est de $\Delta\gamma/2$ en valeur absolue, soit $|\Delta\gamma/2|$

Sur la plupart des tomodensitomètres, il existe des moyens de réglage précis de la position de l'ensemble des détecteurs (c'est-à-dire le boîtier 13) par rapport à la source. Dans la plupart des cas, ce « vernier » est ajusté pendant la phase de mise au point de l'appareil pour annuler aussi précisément que possible tout décalage entre les détecteurs et la source, c'est-à-dire :

$$\gamma_n = - \Delta\gamma/2 \text{ et } \gamma_{n+1} = + \Delta\gamma/2.$$

Les mêmes moyens peuvent être utilisés pour provoquer le décalage statique des détecteurs à $|\Delta\gamma/4|$

En ce qui concerne le décalage dynamique entre les vues des séries $V_i$ et $W_i$, on pourra procéder de différentes manières. On pourra par exemple acquérir la première série pendant un premier tour et la seconde série pendant un second tour, de l'ensemble source-détecteur. Une façon simple d'obtenir le décalage voulu entre le premier et le deuxième tour consiste à utiliser un codeur incrémental dont le pas élémentaire de comptage soit $\Delta\gamma/2$ (ou un sous-multiple de cette valeur), c'est-à-dire qu'il fournisse une impulsion exploitable tous les $\Delta\gamma/2$. Deux vues successives d'une série seraient ainsi déclenchées toutes les 4 h impulsions du codeur incrémental pour la série $V_i$ et toutes les 4 impulsions pour la série $W_i$ et le décalage dynamique à la fin d'un tour se ferait par exemple « en sautant » une impulsion du codeur incrémental avant d'acquérir la première vue de la seconde série. Les moyens de traitement logique à associer au codeur incrémental pour réaliser cette fonction de décalage dynamique sont d'une très grande simplicité et leur conception est à la portée de l'homme du métier. Si la rapidité des circuits électroniques le permet (ou éventuellement en adoptant une vitesse de rotation plus faible de l'ensemble source-détecteurs) il est aussi parfaitement possible de procéder à une acquisition « entrelacée » des vues des deux séries. Dans le cas particulier décrit ci-dessus, par exemple, on pourrait acquérir les vues de la façon suivante :

— la vue $V_i$ serait acquise à $\beta = i\Delta\beta$

— la vue $W_i$ serait acquise à $\beta = i\Delta\beta + \Delta\gamma/2$

— la vue $V_{i+1}$ serait acquise à $\beta = (i + 1) \Delta\beta$

— la vue $W_{i+1}$ serait acquise à $\beta = (i + 1) \Delta\beta + \Delta\gamma/2$

et ainsi de suite...

Bien entendu, dans ce dernier cas, le programme de l'ordinateur serait modifié pour écrire les données alternativement dans les mémoires A et B.

On va maintenant généraliser le principe de l'invention à un tomodensitomètre fonctionnant en « mode continu ». Ce type de tomodensitomètre est également connu et il se distingue essentiellement du tomodensitomètre fonctionnant en mode pulsé en ce que le faisceau en éventail et généré en permanence et en ce que la lecture des détecteurs à chaque prise de « vue » se fait par scrutation progressive, d'une extrémité à l'autre de l'ensemble multidétecteurs, par exemple depuis le détecteur $\gamma_1$ jusqu'au détecteur $\gamma_{2n}$.

Deux paramètres supplémentaires doivent donc être pris en considération :

— la vitesse de rotation, $v$, de l'ensemble source-détecteurs ;

— l'intervalle de temps $\tau$ séparant l'acquisition des valeurs échantillonnées correspondant à deux détecteurs voisins, en considérant une vitesse de scrutation constante.

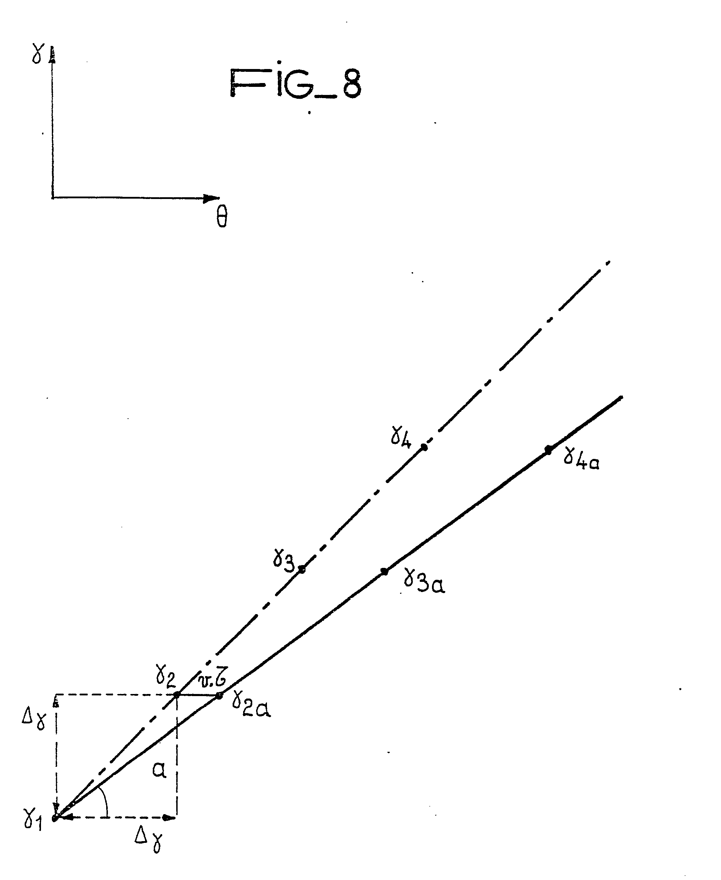

La figure 8 illustre la façon dont la représentation d'une vue dans l'espace $[\theta, \gamma]$ évolue si on prend en compte les paramètres $v$ et $\tau$. La vue portée par la droite en trait interrompu correspond au mode pulsé tandis que la même vue portée par la droite en trait plein correspond au mode continu.

Les valeurs échantillonnées se déplacent parallèlement à l'axe $\vec{\theta}$ puisque $\theta = \beta + \gamma$ ; $\beta$ variant pendant l'acquisition. Les deux droites concourrent en $\gamma_1$ puisque la scrutation des détecteurs commence par le détecteur $\gamma_1$ et la valeur échantillonnée suivante, $\gamma_2$, se trouve déplacée en $\gamma_{2a}$ d'une distance $v \cdot \tau$ dans l'espace $[\theta, \gamma]$, parallèlement à l'axe des $\vec{\theta}$. Soit $a$ l'angle entre $\overrightarrow{\gamma_1\gamma_2}$ et $\overrightarrow{\gamma_1\gamma_{2a}}$. Du fait que $\gamma_1$ et $\gamma_2$ sont portés par une droite parallèle à la première bissectrice, la pente de la droite $\overrightarrow{\gamma_1\gamma_{2a}}$ est :

$$tga = \frac{\Delta\gamma}{\Delta\gamma + v \cdot \tau} = \frac{1}{1 + \dfrac{v \cdot \tau}{\Delta\gamma}}$$

soit $\alpha = v \cdot \tau/\Delta\gamma$,

$tga = 1/1 + \alpha$

Les vues sont donc portées par des droites parallèles à la droite d'équation $\theta = (1 + \alpha) \gamma$.

7

## 0 142 417

Si on pose $(1 + \alpha)\,\gamma = \gamma_e$, on constate que toutes les opérations et transformations qui ont été décrites en référence au mode pulsé dans l'espace $[\theta, \gamma]$ sont conservées dans l'espace $[\theta, \gamma_e]$ pour le mode continu. Le mode pulsé peut même être considéré comme un cas limite du mode continu puisqu'une émission pulsée de la source peut être considérée comme réalisant des prises de « vues » à vitesse nulle ($v = O$, donc $\alpha = O$) et une lecture simultanée de tous les détecteurs correspond à $\tau = O$, donc $\alpha = O$.

Dans le cas du mode continu, $\gamma_e$ (gamma équivalent) remplace donc $\gamma$ et $\Delta\gamma_e$ remplace $\Delta\gamma$ sauf en ce qui concerne le décalage de l'ensemble de détecteurs par rapport à la droite OF, qui reste $|\Delta\gamma/4|$.

D'autres modes de scrutation entraînent une variation du coefficient $\alpha$. Par exemple, si on commence la scrutation progressive en partant de l'autre extrémité de l'ensemble de détecteurs, tout ce qui précède est valable avec $\alpha = -\,v \cdot \tau/\Delta\gamma$.

**Revendications**

1. Procédé de reconstruction d'image par tomodensitométrie, du type consistant à faire tourner un ensemble source-détecteurs dans le plan d'une coupe à imager, ladite source émettant un faisceau de rayonnement pénétrant en forme d'éventail et à relever et mémoriser une succession d'ensembles de valeurs appelés vues pour différents angles $\beta$ de rotation de l'ensemble source-détecteurs par rapport à un système d'axes de référence fixe (XOY) dudit plan, lesdits détecteurs étant agencés pour converger vers le foyer (F) de ladite source et chaque vue étant échantillonnée pour des angles $\gamma$ représentatifs des détecteurs et repérés à partir de la droite (OF) joignant le centre de rotation (O) de l'ensemble source-détecteurs et ledit foyer (F), le décalage angulaire entre deux détecteurs adjacents étant $\Delta\gamma$ constant et le décalage angulaire entre vues étant constant, le décalage angulaire entre ladite droite (OF) et le détecteur le plus proche de celle-ci étant réglé à $|\Delta\gamma/4|$, caractérisé en ce qu'il consiste, les conditions suivantes étant réalisées :

$\pi/\Delta\gamma_e = N$ avec N entier positif en posant $\gamma_e = (1 + \alpha)\,\gamma$ où $\alpha$ est un coefficient dépendant de la vitesse de rotation de l'ensemble source-détecteurs et du temps d'acquisition d'une vue ;

— à relever et mémoriser deux séries de vues ($V_i$, $W_i$) avec un décalage entre vues $h \cdot \Delta\beta$ pour la première série ($V_i$) et $\Delta\beta$ pour la seconde série ($W_i$), au moins certaines des vues des deux séries étant décalées entre elles de $|\Delta\gamma_e/2|$ avec $\Delta\beta = 2\Delta\gamma_e$, h étant entier positif ;

— à compléter les vues de la première série par des valeurs échantillonnées de la seconde série dont les coordonnées $(\theta', \gamma')$ repérées dans l'espace $[\theta, \gamma_e]$ avec $\theta = \beta + \gamma_e$ satisfont à la relation :

$$(\theta x, \gamma x) = (\theta' + (2k + 1)\,\pi, -\gamma') \text{ avec k entier relatif}$$

$(\theta x, \gamma x)$ étant les coordonnées dans l'espace $[\theta, \gamma_e]$ de valeurs échantillonnées recherchées de la première série ;

— à appliquer un algorithme de reconstruction, connu en soi, comprenant une convolution et une rétro-projection, aux vues complétées de la première série, pour reconstituer une image.

2. Procédé selon la revendication 1, caractérisé en ce qu'on relève et mémorise les vues ($V_i$) d'une série pendant un tour de l'ensemble source-détecteurs et les vues ($W_i$) de l'autre série pendant le tour suivant et qu'on provoque un décalage de $|\Delta\gamma_e/2|$ dans le relevé des deux séries, entre les deux tours.

3. Procédé selon la revendication 1, caractérisé en ce qu'on relève et mémorise les vues ($V_i$, $W_i$) des deux séries alternativement pendant un même tour.

4. Procédé selon la revendication 2 ou 3, caractérisé en ce que h étant égal à 1, N vues de la première série sont complétées par N vues de la seconde série.

5. Procédé selon la revendication 2 ou 3, caractérisé en ce que h étant supérieur à 1, on ne relève et/ou traite qu'une valeur échantillonnée sur h dans chaque vue de la seconde série.

6. Procédé selon l'une des revendications précédentes pour une tomodensitométrie en mode pulsé, caractérisé en ce que $\gamma_e = \gamma$.

7. Procédé selon l'une des revendications 1 à 5 pour une tomodensitométrie en mode continu, caractérisé en ce que $\alpha = |v \cdot \tau/\Delta\gamma|$, v étant la vitesse de rotation de l'ensemble source-détecteurs et $\tau$ étant l'intervalle de temps séparant l'acquisition des valeurs échantillonnées correspondant à deux détecteurs voisins.

8. Tomodensitomètre du type comportant un ensemble source-détecteurs (F, 13) monté tournant dans un plan de coupe à imager, ladite source (F) étant une source de rayonnement pénétrant en forme d'éventail (11) et lesdits détecteurs (14) étant agencés pour converger vers le foyer (F) de ladite source, lesdits détecteurs étant vus dudit foyer suivant des angles $\gamma$ respectifs repérés à partir de la droite joignant ledit foyer et le centre de rotation (O) de l'ensemble source-détecteurs, deux détecteurs voisins étant angulairement décalés de $\Delta\gamma$,

— des moyens de pilotage (15) pour repérer un certain nombre d'angles $\beta$ de prises de vues de l'ensemble source-détecteurs par rapport à un système d'axes de référence (XOY) et pour engendrer des signaux de commande desdites prises de vues ($V_i$, $W_i$),

— des moyens de mémorisation (M) d'informations représentatives d'ensembles, appelés vues, de valeurs échantillonnées par les détecteurs pour des angles $\beta$ précités,

— un décalage angulaire entre ladite droite (OF) et le détecteur (14) le plus proche de celle-ci est prédéterminé à $|\Delta\gamma/4|$,

— des moyens de calcul (21) pour appliquer un algorithme de reconstruction, connu en soi, comprenant une convolution et une rétro-projection à une série de vues, caractérisé en ce que :

— les conditions suivantes sont satisfaites :

$$\pi/\Delta\gamma_e = N \text{ avec } N \text{ entier positif}$$

en posant $\gamma_e = (1 + \alpha)\ \gamma$ où $\alpha$ est un coefficient dépendant de la vitesse de rotation de l'ensemble source-détecteurs et du temps d'acquisition d'une vue,

— les moyens de pilotage comportent des moyens (15) pour commander la prise et la mémorisation de deux séries $(V_i,\ W_i)$ de vues échantillonnées, lesdites séries étant telles qu'au moins certaines vues voisines de séries différentes sont décalées entre elles de $|\Delta\gamma_e/2|$, les vues de la première série étant décalées angulairement au pas de $h \cdot \Delta\beta$ et celles de la seconde série étant décalées angulairement au pas de $\Delta\beta$; avec $\Delta\beta = 2\Delta\gamma_e$ et h est entier positif, et

— en ce qu'il comporte des moyens de réarrangement (A, B, 22) pour compléter les vues de la première série par des valeurs échantillonnées prélevées dans la seconde série dont les coordonnées $(\theta',\ \gamma')$ dans l'espace $[\theta,\ \gamma_e]$ avec $\theta = \beta + \gamma_e$ satisfont à la relation $(\theta x, \gamma x) = (\theta' + (2k + 1)\ \pi, -\gamma')$ avec k entier relatif, $(\theta x, \gamma x)$ étant les coordonnées dans l'espace $[\theta,\ \gamma_e]$ de valeurs échantillonnées recherchées de la première série.

9. Tomodensitomètre selon la revendication 8, caractérisé en ce que lesdits moyens de pilotage comportent un codeur incrémental (15).

10. Tomodensitomètre selon la revendication 9, caractérisé en ce que le pas élémentaire de comptage dudit codeur incrémental est $\Delta\gamma_e/2$, ou une sous-multiple de cette valeur.

11. Tomodensitomètre selon l'une des revendications 8 à 10, du type fonctionnant en mode pulsé, caractérisé en ce que $\gamma_e = \gamma$.

12. Tomodensitomètre selon l'une des revendications 8 à 10, du type fonctionnant en mode continu, caractérisé en ce que $\alpha = v \cdot \tau/\Delta\gamma$, v étant la vitesse de rotation de l'ensemble source-détecteurs et $\tau$ étant l'intervalle de temps séparant l'acquisition des valeurs échantillonnées correspondant à deux détecteurs voisins.

## Claims

1. A tomodensitometric picture reconstruction method of the type in which a source-detector assembly is rotated in the cross-sectional plane to be viewed, said source emitting a fan-shaped penetrating radiation beam, and in which a succession of data sets called views is measured and stored for different angles $\beta$ of rotation of the source detector assembly with respect to a stationary system of reference axes (XOY) of said plane, said detectors being arranged such that they converge towards the focus (F) of said source and each view being sampled for angles which are representative for the detectors and are defined with respect to the straight line (OF) between the centre of rotation (O) of the source-detector assembly and said focus (F), the angular shift $\Delta\gamma$ between two adjacent detectors being constant and the angular shift between views being constant, the angular shift between said straight line (OF) and the nearest detector being adjusted to $|\Delta\gamma/4|$, characterized in that, the following conditions being realised

$\pi/\Delta\gamma_e = N$, with N being a positive integer and $\gamma_e = (1 + \alpha)\ \gamma$, in which $\alpha$ is a coefficient depending on the rotation velocity of the source-detector assembly and on the time for acquiring one view,

— two series of views $(V_i,\ W_i)$ are taken and stored, the shift between views of the first series $(V_i)$ being $h \Delta\beta$ and for the second series $(W_i)$ being $\Delta\beta$, at least certain views of the second series being mutually shifted by $|\Delta\gamma_e/2|$, with $\Delta\beta = 2\gamma_e$ and h being a positive integer,

— the views of the first series are completed by values sampled from the second series, the coordinates $(\theta',\ \gamma')$ of which, taken in the space $[\theta,\ \gamma_e]$ with $\theta = \beta + \gamma_e$, satisfy the relation $(\theta x, \gamma x) = (\theta' + (2k + 1)\pi, -\gamma')$, with k being a relative integer and $(\theta x, \gamma x)$ being the coordinates in the space $[\theta, \gamma_e]$ of searched sampled values of the first series,

— a reconstruction algorithm known per se and comprising a convolution and a retro-projection is applied to the completed views of the first series for reconstituting a picture.

2. A method according to claim 1, characterized in that the views $(V_i)$ of one series are taken and stored during one turn of the source detector assembly and the views $(W_i)$ of the other series are taken during the next following turn, and that a shift of $|\Delta\gamma_e/2|$ is induced into the sampling of the two series between the two turns.

3. A method according to claim 1, characterized in that the views $(V_i,\ W_i)$ of the two series are alternatively taken and stored during the same turn.

4. A method according to claim 2 or 3, characterized in that, h being equal to 1, N views of the first series are completed by N views of the second series.

5. A method according to claim 2 or 3, characterized in that, h being greater than 1, only one sampled

**0 142 417**

value out of h in each view of the second series is taken and/or processed.

6. A method according to one of the preceding claims for a tomodensitometer operating in a pulsed mode, characterized in that $\gamma_e = \gamma$.

7. A method according to one of claims 1 to 5 for a tomodensitometer operating in a continuous mode, characterized in that $\alpha = |v \cdot \tau/\Delta\gamma|$, v being the rotation velocity of the source-detector assembly and $\tau$ being the time interval separating the acquisition of the sampled values corresponding to two adjacent detectors.

8. A tomodensitometer of the type comprising a source-detector assembly (F, 13) rotatively mounted in a sectional plane to be viewed, said source (F) being a fan-shaped source (11) of penetrating radiation and said detectors (14) being arranged for converging towards the focus (F) of said source, said detectors being seen from said focus under respective angles $\gamma$ with respect to the straight line between said focus and the rotation centre (O) of the source-detector assembly, two adjacent detectors being angularly shifted by $\Delta\gamma$,

— control means (15) for determining a certain number of angles $\beta$ of the source-detector assembly with respect to a system of reference axes (XOY), and for generating signals to control said taking of views $(V_i, W_i)$,

— means (M) for storing informations representating sets of data, called views, which are sampled by the detectors for the angles $\beta$ cited above,

— an angular shift between said straight line (OF) and the nearest detector (14) being determined to be $|\Delta\gamma/4|$,

— computing means (21) being provided for applying to a series of views a reconstruction algorithm known per se and including a convolution and a retro-projection, characterized in that

— the following conditions are met :

$\pi/\Delta\gamma_e = N$, with N being a positive integer and $\gamma_e = (1 + \alpha)\,\gamma$, in which $\alpha$ is a coefficient depending on the rotation velocity of the source-detector assembly and on the time necessary for acquiring a view,

— the control means include means (15) for controlling the acquisition an storage of two series $(V_i, W_i)$ of sampled views, such that at least certain adjacent views of different series are mutually shifted by $|\Delta\gamma_e/2|$, the views of the first series being angularly shifted by a pitch of $h \cdot \Delta\beta$ and those of the second series being angularly shifted by a pitch of $\Delta\beta$, with $\Delta\beta = 2\,\Delta\gamma_e$ and h being a positive integer,

— and that it comprises rearrangement means (A, B, 22) for completing the views of the first series by values sampled from the second series, the coordinates of which $(\theta', \gamma')$ in the space $[\theta, \gamma_e]$ with $\theta = \beta + \gamma_e$ satisfy the relation $(\theta x, \gamma x) = (\theta' + (2k + 1)\,\pi, -\gamma')$, with k being a relative integer and $(\theta x, \gamma x)$ being the coordinates in the space $[\theta, \gamma_e]$ of searched for sampled values of the first series.

9. A tomodensitometer according to claim 8, characterized in that the control means include an incremental encoder (15).

10. A tomodensitometer according to claim 9, characterized in that the elementary counting step of the incremental encoder is $\Delta\gamma_e/2$ or a submultiple of this value.

11. A tomodensitometer according to one of claims 8 to 10 of the type operating in a pulsed mode, characterized in that $\gamma_e = \gamma$.

12. A tomodensitometer according to one of claims 8 to 10 of the type operating in a continuous mode, characterized in that $\alpha = v \cdot \tau/\Delta\gamma$, with v being the rotation velocity of the source-detector assembly and $\tau$ being the interval of time separating the acquisition of sampled values corresponding to two adjacent detectors.

**Patentansprüche**

1. Verfahren zur Rekonstruktion eines Bildes durch Tomodensitometrie, wobei eine aus Quelle und Detektoren gebildete Einheit in der Ebene eines darzustellenden Schnitts gedreht wird und die Quelle ein in Fächerform eindringendes Strahlungsbündel aussendet, worauf eine Folge von Wertesätzen erfaßt und gespeichert wird, die als Aufnahmen unter unterschiedlichen Drehwinkeln $\beta$ der aus Quelle und Detektoren gebildeten Einheit bezüglich eines festen Bezugsachsensystems (XOY) in dieser Ebene bezeichnet werden, wobei die Detektoren so angeordnet sind, daß sie zum Brennpunkt (F) der Quelle konvergieren, und jede Aufnahme für solche Winkel $\gamma$ erfaßt wird, die für die Detektoren repräsentativ sind und ausgehend von der Geraden (OF) zwischen dem Drehzentrum (O) der Einheit und dem Brennpunkt (F) bestimmt werden, wobei der Winkelabstand zwischen zwei benachbarten Detektoren konstant $\Delta\gamma$ beträgt, der Winkelabstand zwischen Aufnahmen konstant ist, der Winkelabstand zwischen der Geraden (OF) und dem nächstliegenden Detektor auf $|\Delta\gamma/4|$ geregelt wird, dadurch gekennzeichnet, daß bei Vorliegen der folgenden Bedingungen :

$\pi/\Delta\gamma_e = N$, wobei N eine positive ganze Zahl ist und $\gamma e = (1 + \alpha)\,\gamma$, wobei $\alpha$ ein von der Drehgeschwindigkeit der aus der Quelle und den Detektoren gebildeten Einheit und von der Erfassungsdauer einer Aufnahme abhängiger Koeffizient ist, das Verfahren darin besteht, daß

— zwei Serien von Aufnahmen $(V_i, W_i)$ mit einer Verschiebung von $h \cdot \Delta\beta$ zwischen den Aufnahmen der ersten Serie $(V_i)$ und von $\Delta\beta$ zwischen den Aufnahmen der zweiten Serie $(W_i)$, wobei zumindest einzelne der Aufnahmen der beiden Serien voneinander einen absoluten Abstand $\Delta\gamma_e/2$ besitzen, mit $\Delta\beta = 2\Delta\gamma_e$, und h eine

10

positive ganze Zahl ist,

— die Aufnahmen der ersten Serie durch erfaßte Werte der zweiten Serie ergänzt werden, deren Koordinaten $(\theta',\gamma')$ im Raum $[\theta,\gamma_e]$ mit $\theta = \beta + \gamma_e$ die folgende Beziehung erfüllen $(\theta x, \gamma x) = (\theta' + (2k + 1)\pi, -\gamma')$, wobei k eine relative ganze Zahl ist und $(\theta x, \gamma x)$ die Koordinaten im Raum $[\theta, \gamma_e]$ der gesuchten erfaßten Werte der ersten Serie sind,

— ein an sich bekannter Rekonstruktionsalgorithmus mit einer Konvolution und einer Rückprojektion auf die ergänzten Aufnahmen der ersten Serie angewandt wird, um ein Bild zu rekonstituieren.

2. Verfahren nach Anspruch 1, dadurch gekennzeichnet, daß man die Aufnahmen $(V_i)$ einer Serie während eines Umlaufs der aus Quelle und Detektoren gebildeten Einheit erfaßt und speichert und die Aufnahmen $(W_i)$ der anderen Serie während des nächstfolgenden Umlaufs, und daß man zwischen den beiden Umläufen eine Verschiebung um $|\Delta\gamma_e/2|$ in der Erfassung der beiden Serien vornimmt.

3. Verfahren nach Anspruch 1, dadurch gekennzeichnet, daß man die Aufnahmen $(V_i, W_i)$ der beiden Serien abwechselnd während desselben Umlaufs erfaßt und speichert.

4. Verfahren nach Anspruch 2 oder 3, dadurch gekennzeichnet, daß für h = 1 die N Aufnahmen der ersten Serie durch N Aufnahmen der zweiten Serie ergänzt werden.

5. Verfahren nach Anspruch 2 oder 3, dadurch gekennzeichnet, daß für H > 1 nur ein erfaßter Wert aus h Werten in jeder Aufnahme der zweiten Serie erfaßt und/oder verarbeitet wird.

6. Verfahren nach einem der vorhergehenden Ansprüche für eine Tomodensitometrie im Impulsbetrieb, dadurch gekennzeichnet, daß $\gamma_e = \gamma$ ist.

7. Verfahren nach einem der Ansprüche 1 bis 5 für eine Tomodensitometrie im kontinuierlichen Betrieb, dadurch gekennzeichnet, daß $\alpha = |v \cdot \tau/\Delta\gamma|$ ist, wobei v die Drehgeschwindigkeit der aus Quelle und Detektoren gebildeten Einheit und $\tau$ das Zeitintervall zwischen der Erfassung der zwei benachbarten Detektoren entsprechenden Werte bedeutet.

8. Tomodensitometer mit einer aus einer Quelle und Detektoren (F, 13) gebildeten Einheit, die in einer darzustellenden Schnittebene drehbar gelagert ist, wobei die Quelle (F) eine in Fächerform (11) eindringende Strahlungsquelle ist und die Detektoren (14) so angeordnet sind, daß sie zum Brennpunkt (F) der Quelle konvergieren, wobei die Detektoren vom Brennpunkt aus unter Winkeln $\gamma$ gesehen werden, die je ausgehend von einer den Brennpunkt und das Drehzentrum (O) der aus Quelle und Detektoren gebildeten Einheit verbindende Geraden gemessen werden und wobei zwei benachbarte Detektoren einen Winkelabstand von $\Delta\gamma$ besitzen,

— wobei Steuermittel (15) vorgesehen sind, um eine gewisse Anzahl von Aufnahmewinkeln $\beta$ der aus Quelle und Detektoren gebildeten Einheit bezüglich eines Bezugsachsensystems (XOY) zu bestimmen und um Steuersignale für diese Aufnahmen $(V_i, W_i)$ zu erzeugen,

— wobei Mittel (M) zur Speicherung von für die von den Detektoren für die erwähnten Winkel $\beta$ erfaßten Wertesätze, Aufnahmen genannt, repräsentativen Informationen vorgesehen sind,

— wobei ein Winkelabstand zwischen der Geraden (OF) und dem dieser nächstliegenden Detektor (14) mit $|\Delta\gamma/4|$ vorgegeben ist,

— wobei Rechenmittel (21) zur Anwendung eines an sich bekannten Rekonstruktionsalgorithmus mit einer Konvolution und einer Rückprojektion auf eine Serie von Aufnahmen vorgesehen sind, dadurch gekennzeichnet, daß

— die folgenden Bedingungen erfüllt sind

$\pi/\Delta\gamma_e = N$, wobei N eine positive ganze Zahl ist und $\gamma_e = (1 + \alpha)\gamma$, worin $\alpha$ ein von der Drehgeschwindigkeit der aus Quelle und Detektoren gebildeten Einheit und von der Erfassungsdauer einer Aufnahme abhängiger Koeffizient ist,

— die Steuermittel Mittel (15) zur Steuerung der Erfassung und Speicherung zweier Serien $(V_i, W_i)$ von Aufnahmen aufweisen, wobei die Serien so gewählt sind, daß mindestens einige benachbarte Aufnahmen unterschiedlicher Serien voneinander einen Abstand von $|\Delta\gamma_e/2|$ und die Aufnahmen der ersten Serie einen Winkelabstand von h $\cdot \Delta\beta$ und die der zweiten Serie von $\Delta\beta$ besitzen, wobei $\Delta\beta = 2\Delta\gamma_e$ ist und h eine positive ganze Zahl ist,

— und daß Mittel (A, B, 22) zur Neuanordnung vorgesehen sind, um die Aufnahmen der ersten Serie durch in der zweiten Serie erfaßte Werte zu ergänzen, deren Koordinaten $(\theta',\gamma')$ im Raum $[\theta,\gamma_e]$ mit $\theta = \beta + \gamma_e$ der Beziehung genügen $(\theta x, \gamma x) = (\theta' + (2k + 1)\pi, -\gamma')$, worin k eine relative ganze Zahl und $(\theta x, \gamma x)$ die Koordinaten im Raum $[\theta, \gamma_e]$ der gesuchten erfaßten Werte der ersten Serie sind.

9. Tomodensitometer nach Anspruch 8, dadurch gekennzeichnet, daß die Steuermittel einen Inkrementkodierer (15) besitzen.

10. Tomodensitometer nach Anspruch 9, dadurch gekennzeichnet, daß der elementare Zählschritt dieses Inkrementkodierers $\Delta\gamma_e/2$ oder ein Untervielfaches dieses Werts ist.

11. Tomodensitometer nach einem der Ansprüche 8 bis 10, der im Pulsmodus betrieben wird, dadurch gekennzeichnet, daß $\gamma_e = \gamma$.

12. Tomodensitometer nach einem der Ansprüche 8 bis 10, der im kontinuierlichen Modus betrieben wird, dadurch gekennzeichnet, daß $\alpha = v \cdot \tau/\Delta\gamma$, wobei v die Drehgeschwindigkeit der aus Quelle und Detektoren gebildeten Einheit und $\tau$ das Zeitintervall zwischen der Erfassung der zwei benachbarten Detektoren entsprechenden Werte ist.

FIG_1

0 142 417

# FIG_2

$$\gamma$$

$V_1$   $V_2$   $V_3$

$\gamma n+2$   $\gamma n+2$

$\Delta\gamma$

$\dfrac{\Delta\gamma}{2}$   $\gamma n+1$   $\gamma n+1$   $\theta$

$\gamma n$   $-\dfrac{\Delta\gamma}{2}$   $\gamma n$

$\gamma n-1$   $\gamma n-1$

# FIG_3

$$\gamma$$

$V_1$   $V_2$   $V_3$

$\gamma n+3$

$\gamma n+2$

$\Delta\gamma$

$\dfrac{3\Delta\gamma}{4}$   $\gamma n+1$   $\gamma n+1$   $\gamma n+1$   $\theta$

$\gamma n$   $-\dfrac{\Delta\gamma}{4}$   $\gamma n$   $\gamma n$

$\gamma n-1$

# FiG_4

# FiG_5

FiG_6

FiG_7

FIG_8